Europäisches Patentamt

European Patent Office

Office européen des brevets

(11) Veröffentlichungsnummer: **0 070 917**
**B1**

(19)

(12) **EUROPÄISCHE PATENTSCHRIFT**

(45) Veröffentlichungstag der Patentschrift:
**06.11.85**

(21) Anmeldenummer: **81106618.2**

(22) Anmeldetag: **26.08.81**

(51) Int. Cl.⁴: **B 01 F 5/06,** F 28 F 25/08,
B 01 D 53/18, B 01 D 53/20,
B 01 D 3/24

(54) Kolonne für Stoff- und/oder Wärmeaustauschverfahren.

(30) Priorität: **30.07.81 CH 4922/81**

(43) Veröffentlichungstag der Anmeldung:
**09.02.83 Patentblatt 83/6**

(45) Bekanntmachung des Hinweises auf die Patenterteilung:
**06.11.85 Patentblatt 85/45**

(84) Benannte Vertragsstaaten:
**DE FR GB IT NL SE**

(56) Entgegenhaltungen:
**DE - A - 2 630 347**
**DE - A - 2 810 648**
**FR - A - 2 223 071**
**FR - A - 2 269 998**
**GB - A - 622 706**
**US - A - 3 378 239**
**US - A - 3 871 624**

(73) Patentinhaber: **GEBRÜDER SULZER
AKTIENGESELLSCHAFT, Zürcherstrasse 9,
CH-8401 Winterthur (CH)**

(72) Erfinder: **Meier, Werner, Dr., Rosenweg 1, CH-8353 Elgg
(CH)**

(74) Vertreter: **Dipl.-Ing. H. Marsch Dipl.-Ing. K. Sparing
Dipl.-Phys.Dr. W.H. Röhl Patentanwälte,
Rethelstrasse 123, D-4000 Düsseldorf (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Kolonne für Stoff- und/oder Wärmeaustauschverfahren im Gegenstrom, wobei im Austauschteil der Kolonne mindestens ein Einbauelement querschnittsfüllend angeordnet ist, welches aus zur Mantelrohrachse parallel angeordneten Lagen besteht, wobei jede Lage zur Mantelrohrachse geneigte Strömungskanäle aufweist und die Lagen derart zusammengefügt sind, dass sich die Strömungskanäle von benachbarten Lagen kreuzen.

Eine Kolonne mit derartigen Einbauelementen ist aus der CH-A-398503 bekannt.

Die einzelnen Lagen dienen hierbei als Trägerflächen für die als Film unter dem Einfluss der Schwerkraft herabrieselnde flüssige Phase, die mit der die Lücken des Einbauelementes im Gegenstrom zu dieser flüssigen Phase ausfüllenden Gasphase, z. B. bei Anwendung auf Rektifikations- oder Absorptionskolonnen oder einer zweiten flüssigen Phase bei Anwendung auf Extraktionskolonnen in Flächenkontakt gebracht wird.

Die Stoffaustauschvorgänge finden hierbei jeweils zwischen zwei benachbarten Lagen statt. Infolge der geschlossenen Flächen der Lagen kann kein Konzentrationsausgleich der Phasen über den gesamten Kolonnenquerschnitt erfolgen. Um einen solchen Ausgleich zu erreichen, müssen in den bekannten Kolonnen mindestens zwei Einbauelemente übereinander angeordnet sein, wobei der eine Packungskörper gegenüber dem anderen um 90° verschwenkt ist.

Aus der US-A-3871624 ist eine statische Mischvorrichtung bekannt, die aus einer Anzahl von sich berührenden Lagen besteht. Diese Lagen bestehen aus parallel zur Längsachse der Vorrichtung angeordneten, durchgehenden Platten, wobei auf diesen Platten beidseitig Leitflächen angeordnet sind, derart, dass zwischen benachbarten Platten sich kreuzende Kanäle gebildet werden. Derartige statische Mischvorrichtungen werden von den zu mischenden Medien im Gleichstrom durchsetzt, wobei die Oberflächen der Platten und Leitflächen keine Rieselflächen bilden, sondern der offene Strömungsquerschnitt der Mischvorrichtung von den zu mischenden Medien ausgefüllt ist.

Andere Ausführungsformen von statischen Mischvorrichtungen sind beispielsweise aus der DE-B-2328795 und der DE-B-2522106 bekannt. Bei diesen Vorrichtungen sollen die einzelnen Lagen aus parallelen, durchgehenden, im wesentlichen rechteckigen Leitflächen bestehen, wobei sich die Leitflächen von benachbarten Lagen kreuzen. Auch diese Strukturen, die von einem Mantelrohr umschlossen sind, werden im Betrieb von den zu mischenden Medien im Gleichstrom durchsetzt. Ebenfalls wird der freie Strömungsquerschnitt von den Medien ausgefüllt, und die Leitflächen bilden keine Rieselflächen für eine flüssige Phase.

Bei Kolonnen, wie sie die Erfindung betrifft, finden beim Stoff- und Wärmeaustausch zwischen den im Gegenstrom die Kolonne durchsetzenden Medien Diffusionsvorgänge statt, die in dem Bereich der sich berührenden Grenzschichten der beiden fluiden Medien, beim Rektifizieren zwischen der flüssigen und gasförmigen Phase, erfolgen.

Die Erfindung hat sich zum Ziel gesetzt, mit einem Einbauelement einen verbesserten und beschleunigten Stoffaustausch sowie einen Konzentrationsausgleich über den Kolonnenquerschnitt in Gegenstromkolonnen zu erreichen.

Diese Aufgabe wird erfindungsgemäss dadurch gelöst, dass die einzelnen Lagen aus abstandsweise angeordneten, parallelen und im wesentlichen rechteckigen Leitflächen bestehen, wobei die Leitflächen von jeweils zwei benachbarten Lagen sich kreuzen und zweiseitig offene, sich kreuzende Strömungskanäle bilden.

Aufgrund der offenen Struktur wird eine gute Verteilung der Gasphase bei Stoff- und direktem Wärmeaustausch, wie z. B. bei der Rektifikation und Absorption sowie der flüssigen Phase bei der Extraktion über den Querschnitt des Einbaukörpers erzielt.

Weiterhin wird bei Gas-Flüssig Anwendungen durch die geneigte Anordnung der Leitflächen eine sehr gute seitliche Vermischung der Flüssigkeit erreicht, indem die Flüssigkeit entlang der Leitflächen rieselt.

Überraschend hat sich gezeigt, dass sich die Flüssigkeit auch über die Unterseite der Leitflächen ausbreitet. Zusätzlich findet an den Berührungsstellen von benachbarten Leitflächen ein Übergang der Flüssigkeit von der einen zur anderen Leitfläche statt.

Durch die erfindungsgemässen Massnahmen wird somit eine gute radiale Führung der Gas- und Flüssigkeitsphase erreicht und damit eine maximale Ausnützung des treibenden Konzentrations- bzw. Temperaturgefälles für die Stoff- und Wärmeaustauschvorgänge erzielt.

An allen Stellen, wo auf den Leitflächen Flüssigkeit zu oder abgeführt wird, oder der Rieselfilm beschleunigt bzw. verzögert wird, wird der Ablauf des Flüssigkeitsfilms gestört, was eine Umwälzung von Flüssigkeitsteilchen aus dem Kernstrom an die Oberfläche und umgekehrt bewirkt und dauernd die Oberfläche des Flüssigkeitsfilmes erneuert.

Diese mechanische Bewegung ist um ein Vielfaches rascher als die Bewegung der Flüssigkeitsmoleküle durch Diffusion. Dieses hat zur Folge, dass Konzentrations- bzw. Temperaturunterschiede nicht alleine durch Diffusion, sondern durch rasche Bewegung der Flüssigkeitsteilchen gegeneinander ausgeglichen werden.

Durch die erfindungsgemässen Massnahmen wird der Stoffaustausch und bei Wärmeübertragung der Wärmeaustausch wesentlich beschleunigt und verbessert. Ausserdem ist der Vorteil eines geringen Druckverlustes gegeben.

Diese Effekte können durch die folgenden Weiterbildungen der Leitflächen erhöht werden.

Durch eine Oberflächenstrukturierung, wie z. B. Riffelung, kann die Ausbreitung der Flüssigkeit auf den Leitflächen verbessert werden.

Weiterhin kann dadurch, dass die Leitflächen des Einbauelementes mit Lochungen versehen sind, eine verstärkte Vermischung der herabrieselnden Flüssigkeitsströme auf den oberen und unteren Seiten der Leitflächen erreicht werden.

Durch Überlappen der Leitflächen an den Kreuzungsstellen kann das Übertreten der Flüssigkeit von einer Leitfläche zur benachbarten unterstützt werden.

Eine andere Möglichkeit des Flüssigkeitsübertrittes von einer Leitfläche auf die benachbarte kann durch eine zackenartige Ausbildung der Längskanten und Enden der Leitflächen herbeigeführt werden.

In diesem Falle, wie auch im Falle, wo die Oberfläche der Leitflächen mit einer Riffelung, insbesondere einer fischgratartigen Riffelung versehen ist, geschieht der Übertritt der Flüssigkeit nicht nur an den Berührungsstellen der Leitflächen, sondern auch durch Abtropfen von den Kanten einer Leitfläche auf die benachbarten, darunterliegenden Leitflächen. Diese Tropfenbildung bewirkt eine zusätzliche Vergrösserung der Austauschoberfläche zwischen den beiden Phasen. Darüber hinaus bewirken die auf eine Leitfläche auftreffenden Tropfen eine zusätzliche, die Austauschvorgänge fördernde Störung des auf dieser Fläche befindlichen Rieselfilmes.

Durch abschnittsweise Strukturierung oder treppenartige Ausbildung der Leitflächen können zusätzliche Beschleunigungs- bzw. Verzögerungseffekte des Flüssigkeitsfilmes erzielt werden.

Die erfindungsgemässe Vorrichtung wird anhand von in der Zeichnung dargestellten Ausführungsbeispielen im folgenden erläutert.

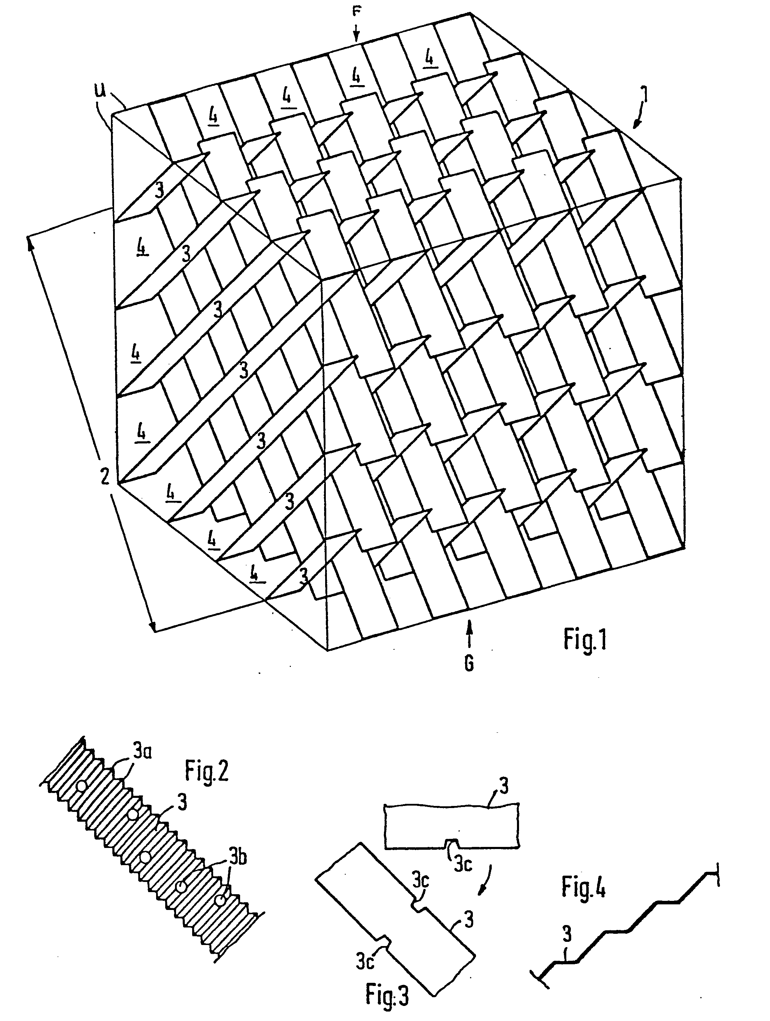

Fig. 1 zeigt in perspektivischer Darstellung eine Ausführungsform eines erfindungsgemäss ausgebildeten Packungskörpers, während die Fig. 2 bis 7 Detaildarstellungen von Leitflächenausschnitten zeigen.

Im vorliegenden Fall ist der Packungskörper für den Einbau in einer Stoffaustauschkolonne, beispielsweise Rektifizierkolonne von quadratischem Querschnitt, bestimmt.

Jedoch kann der Querschnitt auch eine andere Formgebung haben, z. B. kreisförmig, wenn die Kolonne kreiszylindrisch ausgebildet ist. In diesem Fall ist der Packungskörper in seinen Randzonen dem Innenmantel der Kolonne angepasst.

Im Ausführungsbeispiel besteht der Packungskörper 1 aus Lagen 2 paralleler Leitflächen 3, wobei die Leitflächen benachbarter Lagen sich berühren und kreuzen. Die sich kreuzenden Leitflächen 3 von jeweils zwei benachbarten Lagen 2 bilden zweiseitig offene, sich kreuzende Strömungskanäle 4.

Die Strömungsrichtung der flüssigen Phase ist mit dem Pfeil F und die der gasförmigen Phase mit dem Pfeil G bezeichnet.

Mit den Linien U ist die Kontur des Einbauelementes 1 schematisch angedeutet.

Die Oberflächen der Leitflächen 3 können mit einer Riffelung 3a versehen sein, wie aus Fig. 2 hervorgeht. Diese Riffelung kann auch fischgratartig ausgeführt sein. Weiterhin ist in dieser Figur eine Lochung 3b dargestellt.

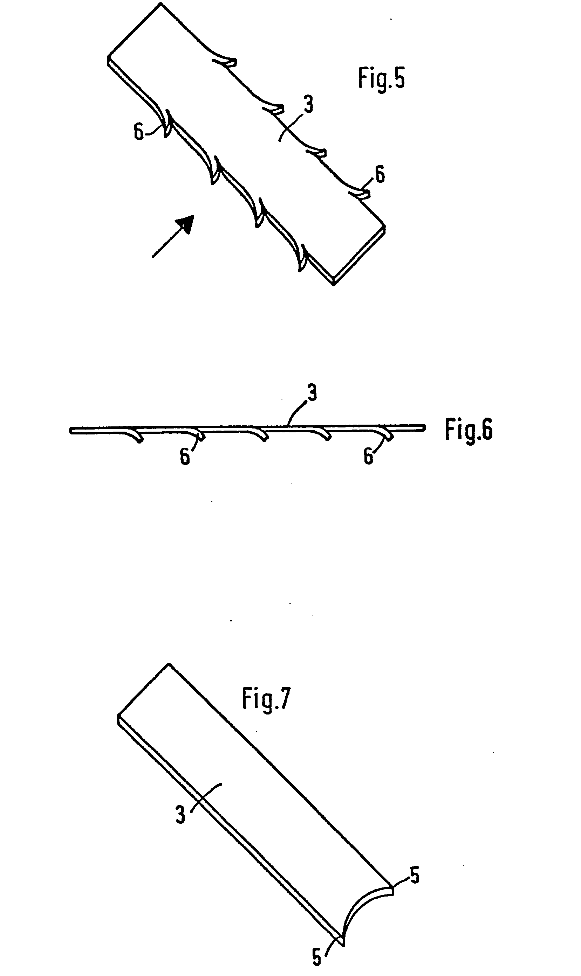

Wie aus Fig. 3 hervorgeht, können die Leitflächen 3 an ihren Kreuzungsstellen mit nutenförmigen Aussparungen 3c versehen sein. Beim Zusammenschieben in Pfeilrichtung erfolgt eine Überlappung der Stege.

Vor dem Einbau des Einbauelementes in die Kolonne können die Leitflächen der einzelnen Lagen an ihren Kreuzungspunkten beispielsweise durch Verschweissen miteinander verbunden werden.

Wie Fig. 4 in einer Seitenansicht zeigt, können die Leitflächen 3 treppenartig ausgebildet sein, Die Fig. 5 und 6 zeigen in einer Aufsicht und in einer Ansicht ein Ausführungsbeispiel mit Zacken 6 an den Seitenkanten einer Leitfläche 3. In Fig. 7 ist eine Ausführungsform mit einer zackenförmigen Ausbildung 5 des unteren Endes einer Leitfläche 3 dargestellt.

Bei sehr grossem Kolonnendurchmesser, von z. B. 1 m oder mehr, kann das Einbauelement aus mehreren Teilen gefertigt sein, die innerhalb der Kolonne zu einem ganzen Einbauelement zusammengefügt werden.

## Patentansprüche

1. Kolonne für Stoff- und/oder Wärmeaustauschverfahren im Gegenstrom, wobei im Austauschteil der Kolonne mindestens ein Einbauelement querschnittsfüllend angeordnet ist, welches aus zur Mantelrohrachse parallel angeordneten Lagen besteht, wobei jede Lage zur Mantelrohrachse geneigte Strömungskanäle aufweist und die Lagen derart zusammengefügt sind, dass sich die Strömungskanäle von benachbarten Lagen kreuzen, dadurch gekennzeichnet, dass die einzelnen Lagen (2) aus abstandsweise angeordneten, parallelen und im wesentlichen rechteckigen Leitflächen (3) bestehen, wobei die Leitflächen (3) von jeweils zwei benachbarten Lagen (2) sich kreuzen und zweiseitig offene, sich kreuzende Strömungskanäle (4) bilden.

2. Kolonne nach Anspruch 1, dadurch gekennzeichnet, dass die Leitflächen (3) eine Oberflächenstruktur, insbesondere eine Riffelung (3a) aufweisen.

3. Kolonne nach Anspruch 1, dadurch gekennzeichnet, dass die Leitflächen (3) Löcher (3b) aufweisen.

4. Kolonne nach Anspruch 1, dadurch gekennzeichnet, dass die Leitflächen (3) abwechslungsweise glatte und strukturierte Oberflächen aufweisen.

5. Kolonne nach Anspruch 1, dadurch gekennzeichnet, dass die Leitflächen (3) treppenartig ausgeführt sind (Fig. 4).

6. Kolonne nach Anspruch 1, dadurch gekennzeichnet, dass die Leitflächen (3) sich an den seitlichen Kreuzungsstellen überlappen.

7. Kolonne nach Anspruch 1, dadurch gekennzeichnet, dass die Längsseiten und/oder Enden der Leitflächen (3) mit Zacken (6) versehen sind.

**Claims**

1. A column for mass-transfer and/or heat-exchange processes in countercurrent, the transfer and/or exchange part of the column containing at least one internal element which fills the crosssection and which consists of layers disposed in parallel to the jacket tube axis, each layer having flow ducts inclined to the jacket tube axis and the layers being so assembled that the flow ducts of adjacent layers cross one another, characterised in that the individual layers (2) consist of spaced parallel and substantially rectangular guide surfaces (3), the guide surfaces (3) of each pair of adjacent layers (2) crossing one another and forming flow ducts (4) which are open on two sides and which cross one another.

2. A column according to claim 1, characterised in that the guide surfaces (3) have a surface structure, more particularly a corrugation (3a).

3. A column according to claim 1, characterised in that the guide surfaces (3) have holes (3b).

4. A column according to claim 1, characterised in that the guide surfaces (3) have smooth and structured surfaces alternately.

5. A column according to claim 1, characterised in that the guide surfaces (3) are of stepped construction (Fig. 4).

6. A column according to claim 1, characterised in that the guide surfaces (3) overlap at the lateral crossing points.

7. A column according to claim 1, characterised in that the longitudinal sides and/or ends of the guide surfaces (3) are provided with barbs (6).

**Revendications**

1. Colonne pour procédé d'échange de matières et/ou d'échange thermique à contre-courant, la partie échangeuse de cette colonne refermant au moins un élément rapporté qui comble sa section et se compose de couches disposées parallèlement à l'axe de l'enveloppe tubulaire, chaque couche présentant des canaux d'écoulement inclinés par rapport á l'axe de l'enveloppe tubulaire et lesdites couches étant assemblées de telle sorte que les canaux d'écoulement de couches voisines se croisent, caractérisée par le fait que les couches individuelles (2) consistent en des surfaces déflectrices (3) parallèles, disposées à intervalles et sensiblement rectangulaires, les surfaces déflectrices (3) de deux couches respectivement voisines (2) se croisant et formant des canaux d'écoulement (4) qui se croisent et sont ouverts sur deux côtés.

2. Colonne selon la revendication 1, caractérisée par le fait que les surfaces déflectrices (3) présentent une structure superficielle, en particulier un cannelage (3a).

3. Colonne selon la revendication 1, caractérisée par le fait que les surfaces déflectrices (3) sont percées de trous (3b).

4. Colonne selon la revendication 1, caractérisée par le fait que les surfaces déflectrices (3) comportent alternativement des faces supérieures lisses et structurées.

5. Colonne selon la revendication 1, caractérisée par le fait que les surfaces déflectrices (3) sont réalisées en forme de gradins (fig. 4).

6. Colonne selon la revendication 1, caractérisée par le fait que les surfaces déflectrices (3) se chevauchent dans les zones latérales de croisement.

7. Colonne selon la revendication 1, caractérisée par le fait que les côtés longitudinaux et/ou les extrémités des surfaces déflectrices (3) sond munis de pointes (6).

Fig.1

Fig.2

Fig.3

Fig.4

Fig.5

Fig.6

Fig.7

7